# EUROPÄISCHE PATENTSCHRIFT

(11) **EP 0 695 057 B1**
(45) Veröffentlichungstag und Bekanntmachung des Hinweises auf die Patenterteilung: **22.09.2004**
(21) Anmeldenummer: 95110586.5
(22) Anmeldetag: 06.07.1995
(51) Int. Cl.: H04L 12/18

(54) **Verfahren zum Ausführen eines Rundsendeauftrages in einem Informationsnetz**
Method for executing a multicast task in an information network
Méthode pour procéder à une tache de diffusion dans un réseau d'information

(30) Priorität: 29.07.1994 DE 4427019
(43) Veröffentlichungstag der Anmeldung: 31.01.1996
(73) Patentinhaber: SIEMENS AKTIENGESELLSCHAFT, 80333 München (DE)
(72) Erfinder: Liebl, Franz, D-85368 Moosburg (DE); Maurer, Gerald, Dipl.-Ing., D-81245 München (DE)

(56) Entgegenhaltungen:
- EP-A- 0 255 767
- US-A- 4 740 954

## Beschreibung

Die vorliegende Erfindung betrifft ein Verfahren zum Ausführen eines Rundsendeauftrages in einem Informationsnetz mit untereinander verbundenen Knoteneinrichtungen und diesen zugeordneten Teilnehmereinrichtungen, bei dem zur Identifizierung einer Rundsendenachricht eine Steuerinformation von einer Teilnehmereinrichtung an die ihr zugeordnete Knoteneinrichtung übermittelt wird.

Informationsnetze weisen mehrere zum Zwecke eines gegenseitigen Informationsaustausches untereinander verbundene, für sich selbständige Informationen bearbeitende Einrichtungen auf, wobei sich diese in größerer Distanz zueinander befinden können. Im Gegensatz zu speziellen Informationsnetzen, die auf eine ausschließliche Übertragung einer einzigen Informationsart, z.B. Daten, Sprache oder Bild eingerichtet sind, können über universelle Informationsnetze mehrere Informationsarten übertragen werden. Nicht selten werden die zu einem Informationsnetz gehörigen Verbindungsleitungen als ganzes oder Teile davon in weiteren Informationsnetzen mitbenutzt.

Die über ein Informationsnetz miteinander verbundenen Informationen bearbeitenden Einrichtungen, die aufgrund ihrer das Informationsnetz bildenden Funktion als Knoteneinrichtungen bezeichnet werden, können je nach zu übermittelnden Informationsarten von unterschiedlicher Gattung sein, z.B. Großrechner oder Personalcomputer in einem Datennetz oder Vermittlungssysteme in einem Fernmeldenetz oder Kommunikationsnetz. Insbesondere im privaten Bereich werden als Vermittlungssysteme sogenannte Kommunikationssysteme eingesetzt.

Aus der Produktschrift der Firma Siemens "Private Kommunikationssysteme, HICOM schafft Verbindungen", Bestellnr. A19100-K3160-A302, Seite "HICOM 300 Networking", ist bereits ein Kommunikationssystem ("HICOM 300") bekannt, das eine Knoteneinrichtung in einem Informationsnetz bilden kann.

Kommunikationssysteme dieser Art sind neben der eigentlichen Vermittlungssteuerung auch zu einer Steuerung bzw. Realisierung zusätzlicher, über die eigentlichen Vermittlungsfunktionen hinausgehender Vorgänge befähigt. Solche zusätzlichen Funktionen werden im allgemeinen als Leistungsmerkmale bezeichnet, wobei hierbei insbesondere für die Informationsart Sprache, eine große Zahl unterschiedlicher Leistungsmerkmale bekannt ist.

Aus der Produktschrift der Firma Siemens "HICOM 300 VMS - Voice Mail Service -", Bestellnr. A19100-K3163-A306, ist ein Kommunikationssystem bekannt, das eine Rundruffunktion bietet, in der Weise, daß von einem beliebigen an das Kommunikationssystem angeschlossenen Teilnehmergerate ein Rundruf - d.h. die Zustellung einer gemeinsamen Nachricht - an alle weiteren an das Kommunikationssystem angeschlossenen Teilnehmergeräte veranlaßt werden kann. Die Ausführung des Rundrufs ist dabei auf die dem Kommunikationssystem zugeordneten Teilnehmergeräte beschränkt.

Aufgabe der vorliegenden Erfindung ist es, in einem Informationsnetz Maßnahmen vorzusehen, so daß ein im Zuge eines Rundsendeauftrages an einem Teilnehmergerät einer Knoteneinrichtung veranlaßter Rundsendeauftrag netzweit an alle weiteren Knoteneinrichtungen und diesen zugeordneten Teilnehmereinrichtungen weitergeleitet werden kann.

Gelöst wird diese Aufgabe erfindungsgemäß durch die Merkmale des Patentanspruchs 1.

Zum besseren Verständnis der vorliegenden Erfindung sei zunächst noch einmal auf den Stand der Technik näher eingegangen. In einem Informationsnetz werden die von einer Knoteneinrichtung zu einer anderen zu übermittelnden Informationen gemäß einem im Informationsnetz implementierten Übertragungsprotokoll gehandhabt. Als bekanntes Protokoll ist z.B. das "X400-Protokoll" zu nennen. Dieses Protokoll sieht vor, daß zu jeder Nachricht, die über das Informationsnetz übertragen werden soll, die einzelnen Zielteilnehmer einer jeweiligen Knoteneinrichtung explizit identifiziert werden müssen. Im Regelfall ist jedoch die Anzahl der für eine Nachricht angebbaren Zielteilnehmer weitaus geringer als die Zahl der einer Knoteneinrichtung zugeordneten Teilnehmereinrichtungen.

Die einer Knoteneinrichtung zugeordneten Teilnehmer bzw. Teilnehmereinrichtungen sind in der betreffenden Knoteneinrichtung anhand von gespeicherten Teilnehmeridentifikatoren, z.B. in Form von Anschlußnummern, identifizierbar. Neben diesen Teilnehmeridentifikatoren sind in jeder Knoteneinrichtung außerdem noch Knotenidentifikatoren gespeichert, die zur Identifizierung aller weiteren Knoteneinrichtungen im Informationsnetz dienen. Als Knotenidentifikatoren werden üblicherweise auch Rufnummern verwendet.

Die vorliegende Erfindung sieht nun vor, daß in jeder Knoteneinrichtung ein freigehaltener Teilnehmeridentifikator gespeichert ist, der keinen Teilnehmer bzw. keine Teilnehmereinrichtung identifiziert. In der Knoteneinrichtung, von der eine Rundsendenachrichtung ins Informationsnetz ausgegeben werden soll, wird eine Rundspruchfunktion ausgeführt, derart, daß eine Rundsendenachricht an die im Informationsnetz befindlichen Knoteneinrichtungen übermittelt wird. Als einziger Zielteilnehmer d.h. als Zieladresse wird dabei jeweils der von der betreffenden, als Empfänger dienenden Knoteneinrichtung freigehaltene Teilnehmeridentifikator angegeben. Von den die Nachricht (Rundsendenachricht) empfangenden Knoteneinrichtungen wird auf das Übermitteln des freigehaltenen Teilnehmeridentifikators als Zieladresse in der Weise reagiert, daß die Nachricht an die der Knoteneinrichtung zugeordneten Teilnehmereinrichtungen weitergegeben wird.

Ein wesentlicher Vorteil des erfindungsgemäßen Verfahrens besteht darin, für netzweite Rundsendeaufträge keinerlei Änderungen in den bestehenden Protokollvorschriften vornehmen zu müssen.

Vorteilhafte Weiterbildungen der Erfindung sind in den Unteransprüchen angegeben.

Obwohl von einer Knoteneinrichtung anhand der in ihr gespeicherten Knotenidentifikatoren eine Rundsendenachricht an alle weiteren Knoteneinrichtungen im Informationsnetz ausgegeben werden kann, ist es von Vorteil, Maßnahmen vorzusehen um einzelne Knoteneinrichtungen auswählbar zu machen, die bei Übermittlung einer Rundsendenachricht unberücksichtigt bleiben sollen; d.h. daß an diese die Rundsendenachricht nicht übermittelt wird.

Obwohl von einer Knoteneinrichtung eine empfangene Rundsendenachricht an alle ihr zugeordneten Teilnehmereinrichtungen übermittelt werden kann (die anhand der Teilnehmeridentifikatoren zu ermitteln sind), ist es von Vorteil, Maßnahmen vorzusehen, um in einer empfangenden Knoteneinrichtung Teilnehmereinrichtungen auswählbar zu machen, die bei der Übermittlung des Rundsendeauftrages unberücksichtigt bleiben sollen.

Können in einer Knoteneinrichtung mehrere Teilnehmeridentifikatoren freigehalten werden, so kann in einem weiteren Schritt vorteilhafterweise vorgesehen sein, in Abhängigkeit des übermittelten freigehaltenen Teilnehmeridentifikators verschiedene Teilnehmereinrichtungen oder Gruppen derselben, in der betreffenden Knoteneinrichtung bei Zustellung der Rundsendenachricht unberücksichtigt zu lassen.

Vorteilhaft ist es, wenn der freigehaltene Teilnehmeridentifikator einer Knoteneinrichtung aus dem Knotenidentifikator der betreffenden Knoteneinrichtung mit Hilfe einer den Knoteneinrichtungen im Informationsnetz bekannten Ableitungsregel ermittelt wird, da sich damit insbesondere in der eine Rundsendenachricht in das Informationsnetz übermittelnden Knoteneinrichtung ein Speichern von den Knoteneinrichtungen zugehörigen freigehaltenen Teilnehmeridentifikatoren erübrigt. Zudem werden keine weiteren, den Rahmen des Protokolls übersteigenden Maßnahmen erforderlich, wenn Knoteneinrichtungen ins Informationsnetz eingegliedert oder entfernt werden oder deren Knotenidentifikator geändert wird.

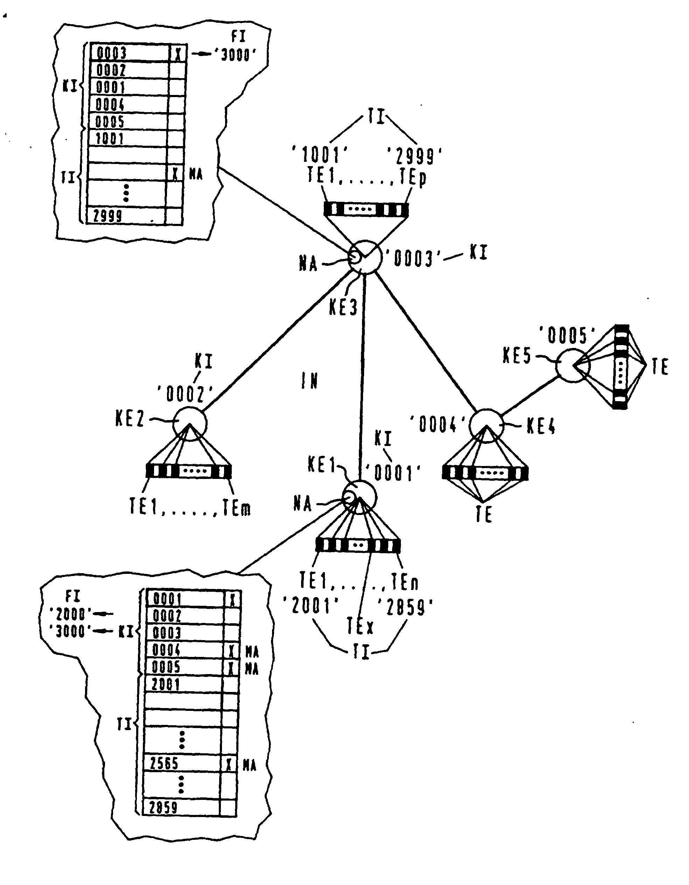

Ein Ausführungsbeispiel der Erfindung wird im folgenden anhand der Zeichnung näher erläutert.

In der Figur ist ein Informationsnetz IN mit insgesamt fünf Knoteneinrichtungen KE1...KE5 symbolisch dargestellt. Die Knoteneinrichtungen sind jeweils Informationen verarbeitende Einrichtungen, z.B. Kommunikationssysteme, wie aus dem eingangs genannten Stand der Technik bekannt. An jede der Knoteneinrichtungen KE1...KE5 sind Teilnehmereinrichtungen TE1...TEn angeschlossen, die in Abhängigkeit der Struktur und Komplexität der betreffenden Knoteneinrichtung KE, d.h. im vorliegenden Beispiel des Kommunikationssystems, zur Erfassung und Wiedergabe unterschiedlicher Informationsarten ausgestaltet sind.

An eine, als ISDN-Kommunikationssystem ausgebildete Knoteneinrichtung KE können z.B. Teilnehmereinrichtungen TE in Form von analogen und digitalen Telefonen, Bildschirmtelefonen, Teletextstationen, Telefaxterminals, Bürosysteme, Arbeitsplatzcomputer (alle nicht dargestellt) usw. angeschlossen sein.

Komplexe Kommunikationssysteme der eingangs genannten Art stellen für die Teilnehmereinrichtungen TE individuelle Nachrichtenpostfächer zur Verfügung, in die ankommende Nachrichten hinterlegt und später vom zugehörigen Teilnehmer entnommen werden können.

Weitere, den Rahmen für ein Verständnis der vorliegenden Erfindung überschreitende Informationen zu Kommunikationssystemen, insbesondere zu der einem Kommunikationssystem dieser Art zugrundeliegenden Hard- und Softwarestruktur, sind z.B. aus "Sonderausgabe Telcom Report und Siemens-Magazin KOM", ISDN im Büro, Siemens Aktiengesellschaft 1985, ISBN3-8009-3846-4 zu beziehen.

Für die Anbindung an das Informationsnetz IN weist jede Knoteneinrichtung KE1,...KE5 ein Korrespondenzmodul NA auf, das die erforderlichen Steuerfunktionen entsprechend des in dem Informationsnetz IN implementierten Protokolls, z.B. des X400-Protokolls, ausführt. In dem Korrespondenzmodul NA einer jeden Knoteneinrichtung KE ist eine Tabelle mit Knotenidentifikatoren KI aller im Informationsnetz IN bekannten Knoteneinrichtungen KE gespeichert. Zudem ist in dem Korrespondenzmodul NA jeweils eine Tabelle mit den Teilnehmeridentifikatoren TI aller, der betreffenden Knoteneinrichtungen KE zugeordneten Teilnehmereinrichtungen TE1,...,Tn gespeichert. Jede der Knotenidentifikatoren KI oder Teilnehmeridentifikatoren TI ist zudem mit einer Markierung MA versehbar, auf deren Bedeutung im weiteren noch eingegangen wird.

Zur Vereinfachung der Zeichnung wurde eine Darstellung der Tabellen mit Knoten- und Teilnehmeridentifikatoren KI, TI nur bei den Knoteneinrichtungen KE1 und KE3 vorgenommen.

Ein netzweiter Rundspruch kann von einer beliebigen Teilnehmereinrichtung TE, z.B. der Teilnehmereinrichtung TEx der Knoteneinrichtung KE1 veranlaßt werden. Dazu wird von der Teilnehmereinrichtung TEx eine die Rundsendenachricht identifizierende Steuerinformation an die Knoteneinrichtung KE1 übermittelt. Die Rundsendenachricht selbst kann dabei von der Teilnehmereinrichtung TEx übermittelt werden, sie kann aber auch in der Knoteneinrichtung KE1 bereits gespeichert sein und durch die von der Teilnehmereinrichtung TEx übermittelte Steueranweisung als aktuelle Rundsendenachricht identifiziert werden.

Bei Eintreffen der Steueranweisung wird die zugehörige Rundsendenachricht, wie aus dem Stand der Technik bekannt, an die anderen Teilnehmereinrichtungen TE1,...,TEn der selben Knoteneinrichtung KE1 übermittelt. Zudem wird das Korrespondenzmodul NA durch die den Rundspruch identifizierende Steueranweisung dazu veranlaßt, die betreffende Nachricht in Form eines herkömmlichen 'X400-Aufrages' ins Informationsnetz an andere Knoteneinrichtungen KE2, KE3 zu übermitteln. Welche Knoteneinrichtungen KE im Informationsnetz IN vorhanden sind, kann anhand der gespeicherten Knotenidentifikatoren KI ermittelt werden, wobei z.B. der an erster Stelle in der Tabelle verzeichnete Knotenidentifikator KI den eigenen Knotenidentifikator KI darstellt. Von den Knotenidentifikatoren KI werden nur solche ausgewählt, die keine Markierung MA besitzen. Im vorliegenden Ausführungsbeispiel wird die Rundsendenachricht, die von der Teilnehmereinrichtung TEx der Knoteneinrichtung KE1 veranlaßt wird, folglich an die Knoteneinrichtungen KE2 und KE3 mit den zugehörigen Knotenidentifikatoren '0002' bzw. '0003' übermittelt. Als Teilnehmeridentifikator TI zur Identifizierung des Zielteilnehmers wird dabei jeweils ein von der empfangenden Knoteneinrichtung KE2, KE3 freigehaltener Teilnehmeridentifikator FI übermittelt. Das heißt, die an die Knoteneinrichtung KE3 gerichtete Rundsendenachricht erhält eine Teilnehmerzieladresse, die aus einem Teilnehmeridentifikator besteht, der keine der Teilnehmereinrichtungen TE1,...,TEp der Knoteneinrichtung KE3 bezeichnet. Ebenso erhält die Knoteneinrichtung KE2 die Rundsendenachricht mit einer Teilnehmerzieladresse, die aus einem Teilnehmeridentifikator besteht, der keine der Teilnehmereinrichtungen TE1...TEm der Knoteneinrichtung KE2 bezeichnet.

Zur Ermittlung der freigehaltenen Teilnehmeridentifikatoren FI wird eine in allen Knoteneinrichtungen KE1...KE5 implementierte Ableitungsregel ausgeführt, die den freigehaltenen Knotenidentifikator einer jeweiligen Knoteneinrichtung aus deren Knotenidentifikator ableitet. Im vorliegenden Ausführungsbeispiel ist eine Ableitungsregel vorgesehen, die den freigehaltenen Knotenidentifikator FI einer Knoteneinrichtung durch Umkehrung der den betreffenden Knotenidentifikator bildenden Ziffernfolge erzeugt. Das heißt, als Teilnehmerzieladresse für die Knoteneinrichtung KE2 mit dem Knotenidentifikator '0002' wird '2000' als freigehaltener Teilnehmeridentifikator FI verwendet. Der an die Knoteneinrichtung KE3 übermittelte freigehaltene Teilnehmeridentifikator FI wird als '3000' ermittelt.

Da jede Knoteneinrichtung KE ihren eigenen Knotenidentifikator KI speichert und daraus mit Hilfe der Ableitungsregel den von ihr freigehaltenen Teilnehmeridentifikator FI ermitteln kann, muß sichergestellt sein, daß dieser nicht einer Teilnehmereinrichtung zugeordnet ist; d.h., in der Knoteneinrichtung KE1 gibt es keine Teilnehmereinrichtung mit der Rufnummer '1000' in der Knoteneinrichtung KE2 gibt es keinen Teilnehmer mit der Rufnummer '2000' usw.

Beim Eintreffen einer über das Informationsnetz IN empfangenen Nachricht wird von dem Korrespondenzmodul NA der empfangenden Knoteneinrichtung (z.B. KE3) zunächst die mit der Nachricht übermittelte Teilnehmerzieladresse gelesen. Ist diese ein Teilnehmeridentifikator TI, der keine Teilnehmereinrichtung TE1,...,TEp der empfangenden Knoteneinrichtung KE3 bezeichnet, erfolgt eine Überprüfung, ob der als Teilnehmerzieladresse übermittelte Teilnehmeridentifikator dem von der empfangenden Knoteneinrichtung KE3 freigehaltenen Teilnehmeridentifikator FI entspricht. Ist dies nicht der Fall, wird die Nachricht verworfen. Stimmt jedoch die übermittelte Teilnehmerzieladresse mit dem in der Knoteneinrichtung KE freigehaltenen Teilnehmeridentifikator FI überein, wird die betreffende Nachricht an die Teilnehmereinrichtungen TE1,...,TEp der Knoteneinrichtung KE3 ausgegeben. Die Teilnehmereinrichtungen TE1...TEp können von dem Korrespondenzmodul NA anhand der gespeicherten Teilnehmeridentifikatoren TI ermittelt werden, wobei Teilnehmereinrichtungen deren Teilnehmeridentifikatoren mit einer Markierung MA versehen sind, die Nachricht nicht erhalten.

Um sicherzustellen, daß die Nachricht auch bei Abwesenheit einzelner Teilnehmer diesen zugänglich gemacht werden kann, wird die Nachricht in die den Teilnehmereinrichtungen zugeordnete Nachrichtenpostfächer eingespeichert.

## Patentansprüche

1. Verfahren zum Ausführen eines Rundsendeauftrages in einem Informationsnetz (IN) mit untereinander verbundenen Knoteneinrichtungen (KE1...KE5) und diesen zugeordneten Teilnehmereinrichtungen (TE), bei dem zur Identifizierung einer Rundsendenachricht eine Steuerinformation von einer Teilnehmereinrichtung (TEx) an die zugeordnete Knoteneinrichtung (KE1) übermittelt wird, von der die Rundsendenachricht an weitere Knoteneinrichtungen (KE2,KE3) gesendet wird, die anhand von in der Knoteneinrichtung (KE1) zur Identifizierung aller Knoteneinrichtungen (KE1...KE5) im Informationsnetz (IN) gespeicherten Knotenidentifikatoren (KI) ermittelt werden, **dadurch gekennzeichnet, daß** als Zieladresse der Rundsendenachricht jeweils ein von den weiteren Knoteneinrichtungen (KE2,KE3) freigehaltener Teilnehmeridentifikator (FI) übertragen wird, der keinen Teilnehmer bzw. Teilnehmereinrichtung identifiziert und bei dessen Empfang die Rundsendenachricht jeweils an zugeordnete Teilnehmereinrichtungen (TE1...TEm,TE1...TEp) weitergeleitet wird, die anhand von in den Knoteneinrichtungen (KE2,KE3) zur Identifizierung der jeweils zugeordneten Teilnehmereinrichtungen (TE1...TEm,TE1...TEp) gespeicherten Teilnehmeridentifikatoren (TI) ermittelt werden.

2. Verfahren nach Anspruch 1, bei dem die in der Knoteneinrichtung (KE1) gespeicherten Knotenidentifikatoren (KI) selektiv mit einer Markierungsinformationen (MA) versehen werden und wobei bei der Ermittlung der weiteren Knoteneinrichtungen die markierten Knotenidentifikatoren (KE4,KE5) unberücksichtigt bleiben.

3. Verfahren nach Anspruch 1 oder 2, bei dem die in den Knoteneinrichtungen (KE1...KE5) gespeicherten Teilnehmeridentifikatoren (TI) selektiv mit einer Markierungsinformation (MA) versehen werden und wobei bei der Ermittlung von zugeordneten Teilnehmereinrichtungen die markierten Teilnehmeridentifikatoren unberücksichtigt bleiben.

4. Verfahren nach Anspruch 3, bei dem unterschiedliche Markierungsinformationen vorgesehen sind, wobei die markierten Teilnehmeridentifikatoren in Abhängigkeit des empfangenen freigehaltenen Teilnehmeridentifikators unberücksichtigt bleiben.

5. Verfahren nach einem der vorherigen Ansprüche, bei dem der von einer Knoteneinrichtung (KE) freigehaltene Teilnehmeridentifikator (FI) mit Hilfe eines Ableitungsverfahrens aus dem die betreffende Knoteneinrichtung identifizierenden Knotenidentifikator (KI) ermittelt wird.

6. Verfahren nach einem der vorhergehenden Ansprüche, bei dem die Rundsendenachricht aus Sprachinformationen besteht.

## Claims

1. Method for executing a broadcast instruction in an information network (IN) having interconnected node devices (KE1...KE5) and subscriber equipment (TE) associated therewith, in which a broadcast message is identified by transmitting a control information item from a piece of subscriber equipment (TEx) to the associated node device (KE1), which sends the broadcast message to further node devices (KE2, KE3) which are ascertained on the basis of node identifiers (KI) stored in the node device (KE1) for the purpose of identifying all of the node devices (KE1...KE5) in the information network (IN), **characterized in that** the destination address transferred for the broadcast message is a respective subscriber identifier (FI) which is reserved by the further node devices (KE2, KE3) and does not identify a subscriber or a piece of subscriber equipment and whose receipt prompts the broadcast message to be respectively forwarded to associated subscriber equipment (TE1...TEm, TE1...TEp) which is ascertained on the basis of subscriber identifiers (TI) stored in the node devices (KE2, KE3) for the purpose of identifying the respective associated subscriber equipment (TE1...TEm, TE1...TEp).

2. Method according to Claim 1, in which the node identifiers (KI) stored in the node device (KE1) are selectively provided with a marking information item are disregarded when the further node devices are ascertained.

3. Method according to Claim 1 or 2, in which the subscriber identifiers (TI) stored in the node devices (KE1...KE5) are selectively provided with a marking information item (MA) and where the marked subscriber identifiers are disregarded when associated subscriber equipment is ascertained.

4. Method according to Claim 3, in which different marking information items are provided, the marked subscriber identifiers being disregarded on the basis of the reserved subscriber identifier received.

5. Method according to one of the preceding claims, in which the subscriber identifier (FI) reserved by a node device (KE) is ascertained, using a derivation method, from the node identifier (KI) which identifies the node device in question.

6. Method according to one of the preceding claims, in which the broadcast message comprises voice information.

## Revendications

1. Méthode pour procéder à une tâche de diffusion dans un réseau d'information (IN) comportant des équipements nodaux (KE1...KE5) interconnectés et des équipements d'abonné (TE) associés à ceux-ci, dans laquelle une information de commande est transmise par un poste d'abonné (TEx) à l'équipement nodal (KE1) associé pour l'identification d'un message de diffusion, d'où le message de diffusion est envoyé à d'autres équipements nodaux (KE2, KE3), qui sont déterminés à l'aide d'identificateurs nodaux (KI) mémorisés dans l'équipement nodal (K1) pour l'identification de tous les équipements nodaux (KE1...KE5) dans le réseau d'information (IN), **caractérisée en ce que** un identificateur d'abonné (FI) réservé par les autres équipements nodaux (KE2, KE3) est transmis comme adresse-cible du message de diffusion respectivement, qui n'identifie aucun abonné ni poste d'abonné et à la réception duquel le message de diffusion est retransmis respectivement à des équipements d'abonné (TE1...TEm, TE1...TEp) associés, qui sont déterminés à l'aide des identificateurs d'abonné (TI) mémorisés dans des équipements nodaux (KE2, KE3) pour l'identification des équipements d'abonné (TE1...TEm, TE1...TEp) associés à ceux-ci respectivement.

2. Méthode selon la revendication 1, dans laquelle les identificateurs nodaux (KI) mémorisés dans l'équipement nodal (KE1) sont pourvus sélectivement d'une information de marquage (MA) et les identificateurs nodaux (KE4, KE5) marqués étant ignorés lors de la détermination des autres équipements nodaux.

3. Méthode selon la revendication 1 ou 2, dans laquelle les identificateurs d'abonné (TI) mémorisés dans les équipements nodaux (KE1...KE5) sont pourvus sélectivement d'une information de marquage (MA) et les identificateurs d'abonné marqués étant ignorés lors de la détermination d'équipements d'abonné associés.

4. Méthode selon la revendication 3, dans laquelle différentes informations de marquage sont prévues, les identificateurs d'abonné marqués étant ignorés en fonction de l'identificateur d'abonné réservé reçu.

5. Méthode selon l'une des revendications précédentes, dans laquelle l'identificateur d'abonné (FI) réservé par un équipement nodal (KE) est déterminé à l'aide d'une méthode de déduction à partir de laquelle l'identificateur nodal (KI) identifiant l'équipement nodal concerné est déterminé.

6. Méthode selon l'une des revendications précédentes, dans laquelle le message de diffusion se compose d'informations vocales.
